# EUROPEAN PATENT SPECIFICATION

(11) **EP 2 141 947 B1**
(45) Date of publication and mention of the grant of the patent: **02.01.2013**
(21) Application number: 08104638.5
(22) Date of filing: 04.07.2008
(51) Int. Cl.: H04W 24/02, H04W 88/08

(54) **Dynamic reconfiguration of a communication network for efficient energy consumption in case of double coverage detection**
Dynamische Rekonfiguration eines Kommunikationsnetzwerks zwecks effizienten Energieverbrauchs bei Erkennung von Doppelabdeckung
Reconfiguration dynamique d'un réseau de communication pour une consommation efficiente d'énergie dans le cas de détection de couverture double

(43) Date of publication of application: 06.01.2010
(73) Proprietor: Nokia Siemens Networks OY, 02610 Espoo (FI)
(72) Inventor: Ahonpää, Timo, 90240 Oulu (FI); Alminoja, Jyrki, 37100 Nokia (FI); Bohdanowicz, Adrian, 53-114 Wroclaw (PL); Lachowski, Jaroslaw, 33-300 Nowy Sacz (PL); Martikkala, Risto, 90800 Oulu (FI); Scheck, Hans-Otto, 02360 Espoo (FI); Vuopala, Tapio, 90830 Haukipudas (FI)
(74) Representative: Bruglachner, Thomas E.

(56) References cited:
- EP-A- 1 799 000
- EP-A- 1 841 251
- WO-A-2008/025874
- WO-A-2008/030171
- US-B1- 6 829 491

## Description

### Field of Invention

The present invention relates to a method of dynamically reconfiguring a communication network, in particular a mobile communication network. Further, the present invention relates to a network element configured to dynamically reconfigure a communication network. Furthermore, the invention relates to a computer program, and a computer program product.

### Art Background

Nowadays mobile networks are generally designed for high capacity and high data rates, i.e. for providing a huge amount of resources. For reaching this goal a great number of base stations are provided which are deployed and activated/deactivated based on network planning.

However, there may be a need for a method of configuring a communication network which enables to dynamically reconfigure the communication network and thereby optimize the network operation concerning reliability of network operation, energy consumption and operational costs for the network operator.

The document US6829491B1 describes a system and method in which the loading status of a network is measured or estimated in order to drive changes to the network for load distribution. The technical advantage of the invention targeted in US682949B1 is to optimize the network performance such as optimize call quality and capacity in the network by adjustments of operating parameters eg., power settings. The network measurement analysis provided by the preferred embodiment controller of the document optimizes both call quality and capacity in the network, or minimizes number of calls dropped. The document describes to optimize call quality, network capacity, or number of calls dropped. The document teaches how to improve call quality and network capacity, or how to reduce number of calls dropped. There is no hint to optimise the network in the direction to decrease call quality nor network capacity. The document US6829491B1 does not disclose or hint to determine an area of double coverage where two or more cells are operating in order to degrade call quality and capacity in the network by adjustments of operating parameters gradually reducing power settings or even switching off cells or sectors. The document US6829491B1 does not disclose or hint to save power or reduce CO2 emissions in the network at all.

The document WO2008/025874A1 describes a method for setting configuration parameters for a communication network where an appropriate set of configuration parameters is automatically chosen from at least two predefined sets of configuration parameters.

The document EP1799000A2 describes a method in a cellular network system including an antenna that has a plurality of sector antennas disposed in the same cell and a plurality of base stations disposed at a location distant from the antenna, wherein based on a predetermined parameter value output from the plurality of the sector antennas, a configuration of the cell is changed by switching connections between the plurality of base stations and the plurality of sector antennas. In the cellular network system, the antenna and the plurality of base stations are linked through a transmission medium by a first switch that switches and connects the plurality of cell stations to the plurality of sector antennas. A control unit controls the first switch such that the connections between the plurality of cell stations and the plurality of sector antennas is reconfigured based on the detected parameter. A base station consists of a group of base station equipment (bank) which is allocated for a cell group.

The document EP1841251A1 describes a method to reconfigure a radio network on basis of statistical network data and on basis of the technical capabilities of the registered mobile terminals to reach an optimal operating mode of the radio network. The method takes into account the readiness of the registered mobile terminals to perform the reconfiguration during the decision to actually reconfigure the radio network. Therefore, the reconfiguration is adapted to the current needs of the mobile terminals.

### Summary of the Invention

The need is met by a method of dynamically reconfiguring a communication network, a network element configured to dynamically reconfigure a communication network, a computer program, and a computer program product according to the independent claims. Advantageous embodiments of the present invention are described by the dependent claims.

According to a first exemplary aspect of the invention a method of dynamically reconfigure a communication network is provided, wherein the method is performed by a network element and comprises receiving, at a first network element, a value indicating a strength of a pilot signal, estimating an actual pathloss of a communication signal based on the strength value, determining an area in the communication network which is coverable by a first and a second base station of the communication network based on the estimated actual pathloss of the first and second base stations by comparing the estimated actual pathloss values, and altering a status of a base station of the communication network based on the estimated actual pathloss, whereby the transmitted strength of the pilot signal of the base stations which is not above the minimum threshold is promptly reduced to a level not causing double coverage upon determination of the area under double coverage.

In particular, the altering of the status of a base station or Node-B may relate to a switch on or a switch off action of the base station. The switch on/off action may relate to the whole station or at least to some elements of the base station, e.g. to power amplifiers. For example, the strength of the pilot signal may be measured by a second network element, e.g. a mobile phone, and/or the first network element may be a base station of the communication network. In this case the strength of the pilot signal may characterize a communication channel or communication link between the mobile phone and the base station. In particular, the communication network may be a cellular communication network. In particular, the estimating may be performed by the first network element. The communication network may be an LTE network or a WCDMA network.

According to a second exemplary aspect a network element is provided which comprises a receiving unit adapted to receive a value indicating a strength of a pilot signal, an estimation unit adapted to estimate an actual pathloss of a communication signal based on the strength value, and a control unit adapted to determine an area in the communication network which is coverable by a first and a second base station of the communication network based on the estimated actual pathloss of the first and second base stations by comparing the estimated actual pathloss values, to generate a control signal for altering a status of a base station of the communication network based on the estimated actual pathloss whereby the transmitted strength of the pilot signal of the base stations which is not above the minimum threshold is promptly reduced to a level not causing double coverage upon determination of the area under double coverage.

According to a third exemplary aspect a computer program is provided, which, when being executed by a processor associated with a network element, is adapted to carry out the steps of a method according the first exemplary aspect of the invention.

According to a fourth exemplary aspect a computer program product comprising a computer-readable medium is provided, in which a computer program is stored which, when being executed by a processor associated with a network element, is adapted to carry out the steps of a method according to the first exemplary aspect of the invention.

By providing a method according to an exemplary aspect it may be possible to dynamically reconfigure a communication network, e.g. at least one base station may alter its status, e.g. switches on or off or at least switches on or off some of its power amplifiers, in order to the reduce energy consumption for example. Since the current or up to date pathloss, i.e. the current load situation of the communication network is considered it may be possible that it is guaranteed that the area served by the base station to be switched off may be covered otherwise, i.e. it may enable some coverage estimation. It may as well be guaranteed that the load of an involved base station or in an involved cell is such that subscribers in the cells to be switched off may be taken over by adjacent cells. Thus, it may be possible to save power and thus possible reduce CO₂ emission, whilst ensuring a secure coverage which may be transparent to subscribers.

A gist of an exemplary aspect of the invention may be that an analyzing of a current load situation in a communication network may be performed and based on this current load situation a status of specific base stations of the communication network may be switched off. The analyzing may in particular be based on the pathloss of pilot signals. Such pilot signals may be sent by a base station and may be received by a mobile phone or PDA, for example.

Next, further exemplary embodiments of the method are described. However, these embodiments also apply to the network element, the program element, and the computer-readable medium.

According to another exemplary embodiment the method further comprises determining an area in the communication network which is currently coverable by more than one base station of the communication network based on the estimated current pathloss, wherein the station altering its status is a base station covering the determined area.

The term "coverable" may particularly denote the fact that mobile network elements, e.g. mobile phones or PDAs, may be served by a respective base station. That is, an area which is coverable by more than one base station may be an area or a sector of a cell which can be served by more than one base station, e.g. may be an area in an overlapping region. In general, the pathloss may be a possible parameter or observable in order to determine a double coverage since in case a network element, e.g. a mobile phone, receives pilot signals above a minimum threshold from more than one base station, the area the network element is located in may be covered by more than one base station.

Thus, it may be possible that in areas, which are currently coverable by more than one base station, at least one of the base stations is switched off in order to save resources, e.g. electricity and thus costs. Furthermore, it may be possible to improve the life time of RF equipment involved, since it is not permanent active. However, since only base stations are switched off which services may be taken over by other base stations, i.e. relating to double covered areas, the transmission reliability.

According to another exemplary embodiment of the method the determining of the area is further based on an actual load of respective base stations. In particular, the respective base stations may be base stations which cover the area. In general at least some regions of the communication network are covered by more than one base station, i.e. the covering range of at least some base stations has overlapping regions. For determining the areas which are currently coverable by more than one base station all base stations which in principle may cover the area may be taken into account.

According to another exemplary embodiment of the method the determining of the area in the communication network which is currently coverable by more than one base station of the communication network is further based on statistical data. In particular, such statistical data may be historical and/or currently data gathered at a respective base station during its operation. Additionally, further measurements may be taken into account, e.g. received signal interference ratios of a respective base station or channel quality indicators measured by the respective base station.

According to another exemplary embodiment of the method the first network element is a base station. Thus, it may be possible that the estimation is performed in a decentralized manner, i.e. every base station may perform the estimation or analyzing of the load and the current coverage on its own.

According to another exemplary embodiment the method further comprises sending a status change indicator to neighbouring network elements before the status of the base station is altered. In particular, such a status change indicator may be a "SWITCH-OFF-QUERY" or a "SWITCH-OFF-INFO" message. Such messages may be sent to neighbouring base stations which may also be able to cover the determined area. After sending such a message to neighbouring base stations the base station may receive acknowledge (ACK) messages and may then shut down, e.g. after receiving such ACK messages or after lapse of a predetermined time period.

Alternatively, such a status change indicator message may be a "SWITCH-ON-REQUEST". Such a switch on request may be send by a base station which is exposed to high load.

The switch on or switch off actions may be performed in an iterative process. That is, in case more than one base station decides to switch on or to switch off these base stations may do this in a sequential or iterative manner. In a first step only one base station may alter its status then the method is performed again in order to decide whether a second base station can be shut down or not.

In case of a simultaneous switch on/off decision for more than one base station an arbitrary algorithm may be used. Such an algorithm may be base on network deployment scenarios or random time offsets, for example.

According to another exemplary embodiment of the method the first network element is a radio resource management unit. According to another exemplary embodiment of the method the radio resource management unit sends a status change request to a base station of the communication network based on the estimated actual pathloss. In particular, the status change request may be a "SWITCH-OFF-REQUEST" or a "SWITCH-ON-REQUEST" which is sent to one or several base station depending on the current load in the communication network or parts, e.g. cells, thereof. Thus, a centralized radio resource management may be possible, i.e. a central unit performs the analyzing and determination of the current load situation in the communication network.

According to another exemplary embodiment the method further comprises altering a power level of a base station based on the estimated pathloss. In particular, the base station may increase its transmitting power, thus possibly increasing the strength of sent pilot signals, so that double coverage areas may be generated. Other base stations covering the same double covered area may decrease their power level or even switch off in order to save resources. Thus, it may be possible that a hand over is initiated by decreasing a power level of one base station while neighbouring base stations may increase their power level. The switch off may be done via a network control and may not require hardware changes in the base station.

A gist of this exemplary embodiment may be that cell breathing is used in order to save resources, e.g. power resources. The term "cell breathing" may particularly denote an increasing of a respective cell in case of a low load while in case of a high load the cell size may decrease. According to this exemplary embodiment the cell breathing is arbitrarily generated by increasing or decreasing the power level of the respective base station in order to enable a switch off of certain base stations.

According to another exemplary embodiment of the method the base station altering its power level is determined according to a predetermined criterion. In particular, such a predetermined criterion may be the number of active communications or the load of the specific base station, e.g. the most active base station may increase its power level while the least active base station may decrease its power level in order to enable a switch off. Another possible predetermined criterion may be a fixed sequence, e.g. fixed in a look up table, of base stations to be switched off. That is, it may be possible to determine the sequence according which base stations are switched off.

According to another exemplary embodiment of the method the altering of the status is an increasing of a power level of the base station, wherein at least one antenna of the base station is tilted. In particular, all antennas of the base station may be tilted in order to enable a better coverage of areas. For example, the tilt may enable that the services of another base station which is switched off may be better replaced by the base station which increases its sending power.

According to another exemplary embodiment of the method the altering of the power level of the base station is further based on a load of the basis station. In particular, the power level may be reduced in case a low load is handled by the base station or the traffic the base station is exposed to is low, e.g. at night time. Moreover, it may be possible to switch off or shut down the whole base station or only part thereof, e.g. particular portions of the base station may be switched off which are associated with specific sectors of a cell the base station relates to. Additionally, other base stations, e.g. neighbouring base stations, may increase their power level in order to handle the additional traffic of the now switched off base station.

Thus, it may be possible to operate the base stations of a mobile communication network, e.g. a WCDMA based network dynamically, i.e. depending on the actual load. By switching off whole base stations the reduction of the power consumption may be greater compared to the case of only reducing the signal strength, e.g. of pilot signals, in an idle mode or state. The reduction in power or energy consumption may particularly be increased when switching off parts or the whole station, since power amplifiers usually have their highest efficiency at full load, so that a reduction of the power level may also reduce the efficiency of the power amplifier leading to a decrease of the reduction in power consumption. Furthermore, also the baseband processing may be load independent so that a total switch off may greatly increase the energy savings compared to a switching into an idle state.

Summarizing a first exemplary aspect of the invention may be seen in providing a method for reconfiguring a communication network which mainly depends on a double coverage detection which enables to dynamically switch on/off low load base stations or Node-B while avoiding coverage holes and call drops. The method may predominately be based on the following measurements:
Base stations pilot strength is measured at a user equipment (inter and intra-system measurements),
load measured at the base station,
and on the statistical (historical) data, gathered at the base station during the "normal" network operation. Of course additional, already available, measurements may be taken into account as well, e.g. received signal interference ratios at the base station or CQI as measured at the bas station, for more accurate algorithm.

When describing such an algorithm, two possible solutions for location of the radio resource management (RRM) unit or entity shall be considered, i.e. a distributed case some decentralized RRM units located in every base station (Node-B), and a centralized case, wherein a central RRM unit is implemented in the network.

Summarizing a second exemplary aspect of the invention may be based on the utilizing of the so-called cell breathing in networks, e.g. WCDMA networks. According to this aspect a method to switch off single sectors or complete base stations of a WDCMA may be enabled by increasing the pilot power and optionally antenna tilt of the remaining sites of the communication network to keep coverage under low load conditions. Such a switch may be done via network control and may not require hardware changes in the base stations but may be implemented as a network software feature. Most WCDMA networks are designed for capacity and high data rates and the WCDMA base stations are located in relative close proximity and are typically interference limited. If only few users are in the network, i.e. during low load or low traffic times, e.g. at night time, the pilot power of certain cells might be reduced and the pilot power of adjacent cells might be increased. This will force the user equipments (UE) in the network to hand over from the weakening cells to the more remote but now more powerful cell. This may also be supported by changing the antenna tilts of the involved sectors. Once a cell has been emptied, it may be switched off completely. Thus, it may be possible to adapt the network design or deployment dynamically to actual traffic or loads. That is, during low peak times less base stations may be switched on than during high peak times. This feature may be supported with typical load data of the network to start and end the cell reduction process to avoid dropped calls. This method may work in a similar way for 4G (OFDM) systems as well.

The method may allow to reduce power consumption and hence OPEX of a cellular network. Furthermore, the feature may be utilized for service and maintenance.

Exemplary embodiments defined above and further aspects of the invention may be apparent from the examples of embodiment described hereinafter.

### Brief Description of the Drawings

Fig. 1 schematically shows double coverage detection.
Fig. 2 schematically shows a base station switch on/off procedure for a decentralized case.
Fig. 3 schematically shows a nominal network deployment.
Fig. 4 schematically shows a switch off and take over environment.
Fig. 5 schematically shows a base station switch on/off procedure for a centralized case.

### Detailed Description

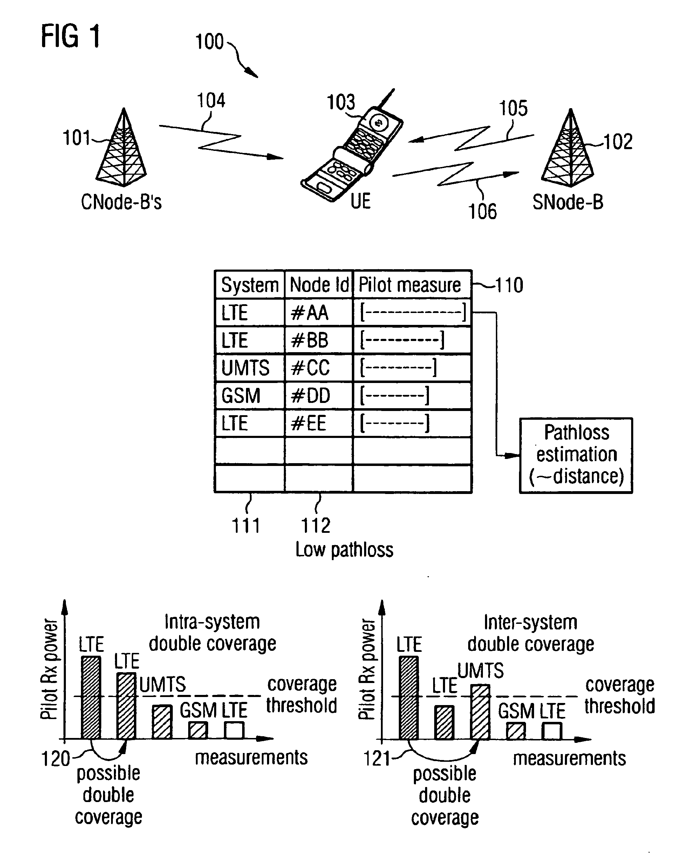

The illustration in the drawing is schematic. Same or similar reference signs in different figures denote same or similar elements. With reference to Figs. 1 to 5 embodiments of the present invention will be described in more detail.

In detail Fig. 1 shows a schematic communication network 100 comprising two Nodes or base stations 101 and 102 and one user equipment (UE) namely a mobile phone 103. Of course a real communication network comprises more elements than shown in the upper part of Fig. 1. Furthermore, some flashes 104 and 105 are depicted in Fig. 1 which shall indicate the pilots sent from the respective Nodes to the UE. The UE measures the strength of the pilot signal and reports the results to the serving Node 102 which is indicated by the flash 106.

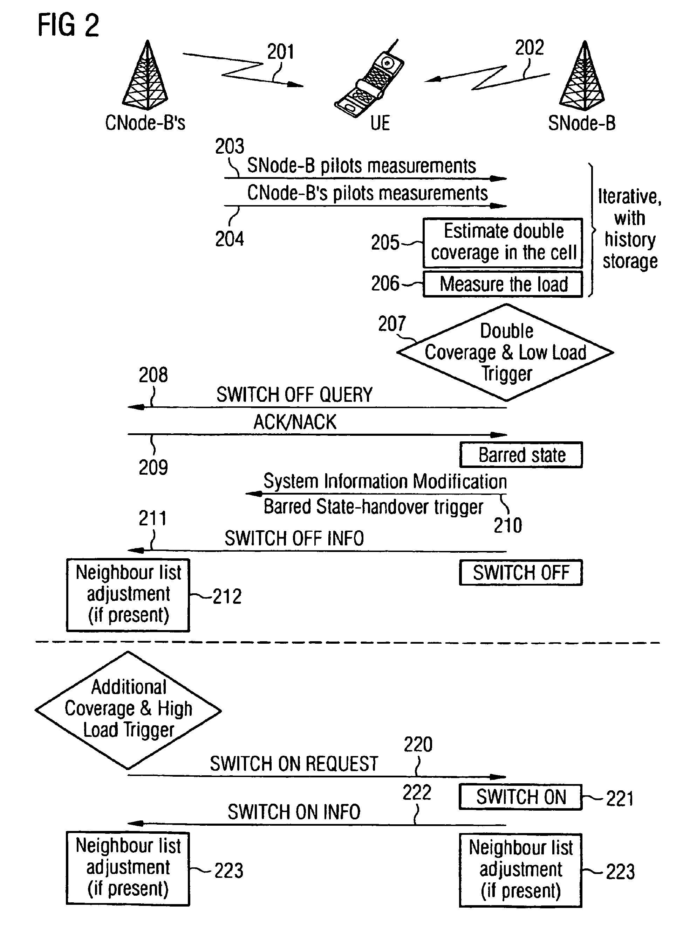

From the reported measurements a pathloss estimation may be determined for different communication links, i.e. communication paths between base station and the reporting UE. In particular, these measurements may also relate to different communication technologies, e.g. LTE, UMTS and GSM. This is schematically shown as a table in the middle part of Fig. 2, where the pilot measure 110 for one UE is shown relating to different technologies 111 and to communication links to different Nodes 112. The pathloss estimation may be used as a distance approximation, i.e. an approximated estimation of the distance between the UE and the respective Node.

In the lower part pilot RX power corresponding to the pilot measure of the table are depicted in histograms. In particular, the left histogram relates to determining an intra-system or intra-technology double coverage, while the right part relates to the determining of an inter-system double coverage. For the intra-system case a possible double coverage is identified for the first two pilot power values corresponding to the first two lines in the table, which is indicated by arrow 120. That is, the respective two values are higher than a coverage threshold, i.e. a pilot power which has to be maintained in order to ensure a minimum quality of the link. For the inter-system case the first and the third pilot power may indicate a possible double coverage, which is indicated by arrow 121. Thus, a possible double coverage may be determined based on the measured pilot signal strengths.

As already indicated the evaluation may be performed for a distributed or decentralized case and for a centralized case.

With respect to Fig. 2 the distributed case will be described in more detail. In this case, following algorithm could be applied:
The UE makes measurements on the pilots of the neighbouring cells 201 and 202 and reports it to the serving Node-B or base station 203 and 204. The measurement includes the base-station ID and the operating technology (GSM, UMTS, LTE). Based on the measurements the actual NB-UE pathloss is estimated and possible double-coverage areas checked 205.

Based on those estimates 205 and load measurements 206, i.e. load measurements of the specific Node, the Node-B may decide to switch off in case a double coverage is identified 207. Then either:
the serving Node-B triggers a SWITCH-OFF-QUERY to all cells 208 which could take over the load/coverage (CNode-B); after ACK response from all CNode-B or no NACK in a given or predetermined time period 209, the SNode-B forces the handover of served UE's 210, sends SWITCH-OFF-INFO to relevant CNode-B's and shuts down 211;
   or:
The SNode-B forces the handover of served UE's, after successful handover SWITCH-OFF-INFO to relevant CNode-B's and shuts down.

Every Node-B, which took over part of the load from the neighbour, may register this fact in the own database, e.g. in form of a list with the cell-id, etc.. Additionally, if needed, the neighbouring cell list for all CNode-B's is amended 212.

The above described is also depicted in the upper part of Fig. 2 while in the lower part the case is schematically depicted that a high load in one of the CNode-B's, which took over some load from the neighbour is detected. In this case a SWITCH-ON-REQUEST 220 is triggered by the CNode-B experiencing the high load to all Node-B registered in the given Node-B with the status OFF. At least one of the Node-B which are switched off switches on 221 and sends a SWITCH-ON-INFO to the neighbouring Node-B 222. All involved Node-B may amend their respective neighbour lists 223.

In case a status change, i.e. switching off/on, of more than one Node-B is performed this is preferably done in sequence, due to the change of the coverage and load measurements condition. In case of simultaneous switch on/off decision for more than one Node-B an arbitrary algorithm may be used. This algorithm may be based i.e. on either network deployment scenarios or random time offset.

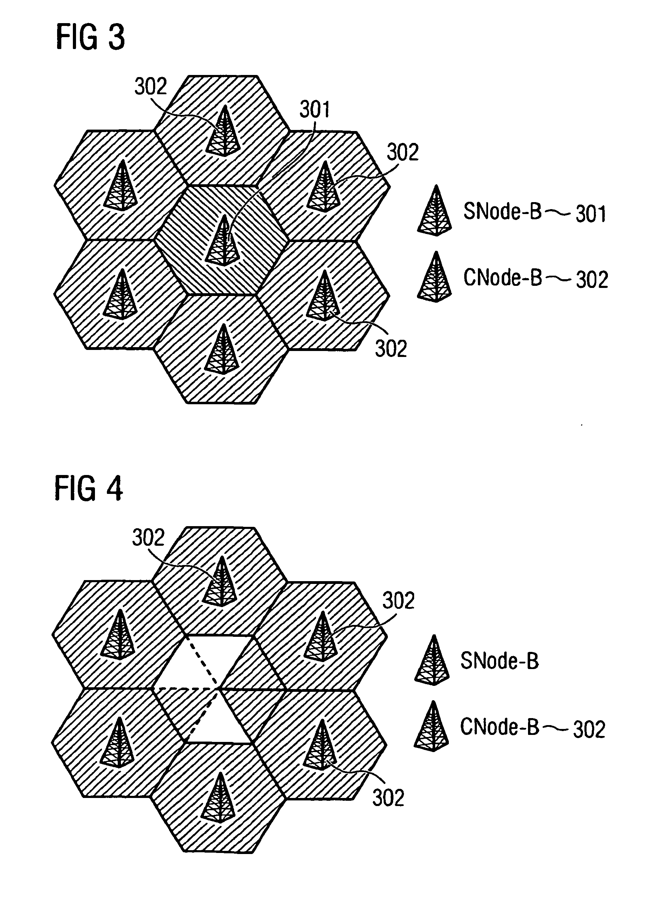

Fig. 3 schematically shows a nominal network deployment. In detail a SNode-B 301 is depicted in the center of the honeycomb cell structure, i.e. the SNode-B cell is surrounded by six CNode-Bs 302. In the nominal network deployment every Node-B serves its respective cell of the communication network.

Fig. 4 schematically shows a switch off and take over environment of the network of Fig. 3. In particular, the SNode-B 301 of Fig. 3 switched off while the former CNode-Bs 302 took over the serving of the cell relating to the SNode-B 301 of Fig. 3, i.e. the central cell in Fig. 3 and Fig. 4.

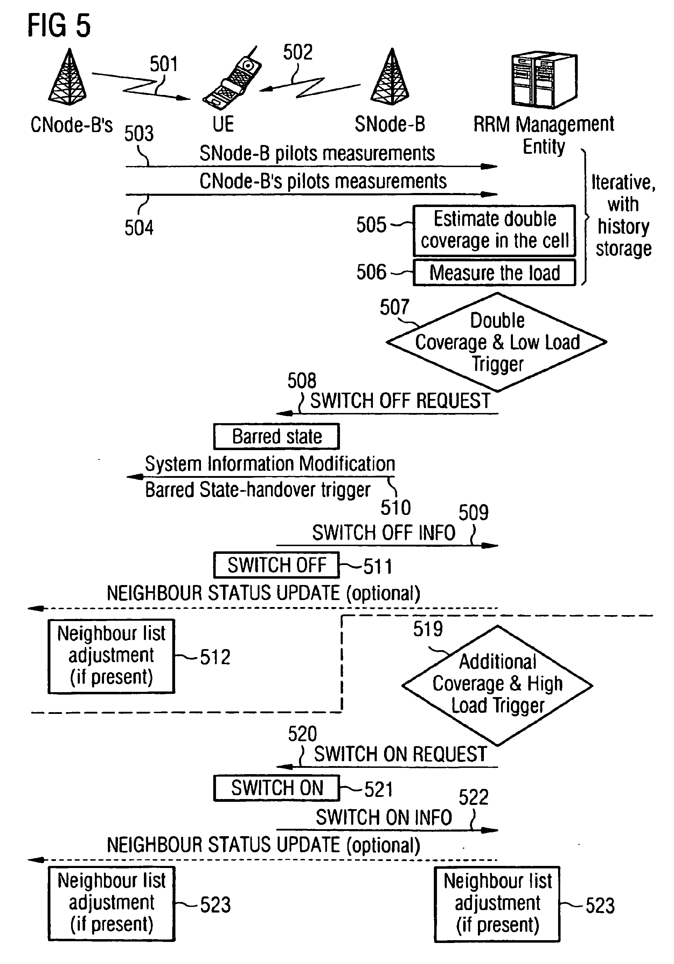

With respect to Fig. 5 the centralized case will be described in more detail. This case is similar to the case described in connection with Fig. 2 however a central radio resource management (RRM) unit or entity takes over the estimation and the determining functionality.

Again the UE makes measurements on the pilots of the neighbouring cells 501 and 502 and reports it to the RRM entity 503 and 504 like in the previously described case. Based on those measurements including load measurements for the Node-B 506, the RRM entity estimates possible double coverage areas 505. Based on those estimates the RRM entity decides to switch off the SNode-B by triggering the SWITCH-OFF-REQUEST 508, in case also low load is recognized 507.

The SNode-B forces the handover for served UE's. After successful handover of all UE's 510 the SNode-B confirms the SWITCH-OFF command to the RRM entity 509 and shuts down 511. Info about status change of the Node-B is delivered to all affected Node-Bs. Additionally, if needed, the neighbouring cell list for all CNode-B's may be adapted 512.

In case of to high load 519 in one of the neighbouring CNode-B's, a SWITCH-ON-REQUESTt 520 is triggered by the RRM entity to the currently switched off SNode-B. At least one switched off Node-B switches on 521 and sends a respective SWITCH-ON-INFO to the RRM entity 522. Additionally, if needed, the neighbouring cell list for all CNode-B's may be adapted 523.

It should be noted that all load based triggers preferably have a hysteresis (given load for given time) which could be based on load history over longer period.

### List of reference signs:

- 100: Communication network
- 101: Base station
- 102: Base station
- 103: Mobile phone
- 104: Pilot signal
- 105: Pilot signal
- 106: Transmitting measurements
- 110: Pilot measure
- 111: System technique
- 112: Node ID
- 120: Possible double coverage
- 121: Possible double coverage
- 201: Pilot signal
- 202: Pilot signal
- 203: Transmitting measurements
- 204: Transmitting measurements
- 205: Estimate double coverage
- 206: Measure load
- 207: Deciding to switch off
- 208: SWITCH-OFF-QUERRY
- 209: ACK/NACK meassage
- 210: Hand over trigger
- 211: SWITCH-OFF-Info
- 212: Adjustment of list
- 220: SWITCH-ON-REQUEST
- 221: Switch on
- 222: SWITCH-ON-INFO
- 223: Adjustment of list
- 301: SNode-B
- 302: CNode-B
- 501: Pilot signal
- 502: Pilot signal
- 503: Transmitting measurements
- 504: Transmitting measurements
- 505: Estimate double coverage
- 506: Measure load
- 507: Deciding to switch off
- 508: SWITCH-OFF-REQUEST
- 509: SWITCH-OFF-INFO
- 510: Hand over trigger
- 511: Switch off
- 512: Adjustment of list
- 519: High load trigger
- 520: SWITCH-ON-REQUEST
- 521: Switch on
- 522: SWITCH-ON-INFO
- 523: Adjustment of list

## Claims

1. A method of dynamically reconfiguring a communication network (100), the method being performed by a network element and comprising the steps of:
receiving (203, 204; 503, 504), at a first network element, a value indicating a strength of a pilot signal transmitted from a base station of the communication network,
estimating an actual pathloss of a communication signal (205, 505) based on the strength value,
determining an area in the communication network which is coverable (207, 507) by a first and a second base station of the communication network based on the estimated actual pathloss of the first and second base stations by comparing the estimated actual pathloss values,
altering a status (511) of the first or second base station of the communication network based on the estimated actual pathloss, whereby the strength of the pilot signal transmitted from one of the first and second base station remains above a minimum threshold,
wherein
the transmitted strength of the pilot signal of the base station which is not above the minimum threshold is promptly reduced to a level not causing double coverage upon determination of the area under double coverage.

2. The method according to claim 1,
wherein the determining of the area is further based on an actual load (207, 507) of respective base stations.

3. The method according to claim 1,
wherein in the determining of the area in the communication network which are currently coverable by more than one base station of the communication network is further based on statistical data.

4. The method according to claim 1,
wherein the first network element is a base station (101, 102).

5. The method according to claim 4, further comprising:
sending a status change indicator (208, 508) to neighbouring network elements before the status of the base station is altered.

6. The method according to claim 1,
wherein the first network element is a radio resource management unit.

7. The method according to claim 6,
wherein the radio resource management unit sends a status change request (508) to a base station of the communication network based on the estimated actual pathloss.

8. The method according to claim 1, further comprising:
altering a power level of a base station based on the estimated pathloss.

9. The method according to claim 8,
wherein the base station altering its power level is determined according to a predetermined criterion.

10. The method according to claim 1,
wherein the altering of the status is an increasing of a power level of the base station, and
wherein at least one antenna of the base station is tilted.

11. The method according to claim 8,
wherein the altering of the power level of the base station is further based on a load of the basis station.

12. A network element comprising:
a receiving unit adapted to receive a value indicating a strength of a pilot signal transmitted from a base station of the communication network,
an estimation unit adapted to estimate an actual pathloss of a communication signal based on the strength value, and
a control unit adapted to determine an area in the communication network which is coverable by the first or a second base station of the communication network based on the estimated actual pathloss of the first and second base stations by comparing the estimated actual pathloss values, and
adapted to generate a control signal for altering a status of the first or second base station of the communication network based on the estimated actual pathloss, whereby the strength of the pilot signal transmitted from one of the first and second base station remains above a minimum threshold, wherein the control unit, upon determination of the area under double coverage, is adapted to promptly reduce the transmitted strength of the pilot signal of the base station which is not above the minimum threshold to a level not causing double coverage.

13. A computer program, which, when being executed by a processor associated with a network element, carries out the steps of a method according to claim 1.

14. A computer program product comprising a computer-readable medium, in which a computer program is stored which, when being executed by a processor associated with a network element, is adapted to provide the processor with computer program means for carrying out the steps of a method according to claim 1.

## Patentansprüche

1. Verfahren zur dynamischen Neukonfigurierung eines Kommunikationsnetzes (100), wobei das Verfahren durch ein Netzelement durchgeführt wird und folgende Schritte umfasst:
Empfangen (203, 204; 503, 504) an einem ersten Netzelement eines eine Stärke eines von einer Basisstation des Kommunikationsnetzes übertragenen Pilotsignals anzeigenden Wertes,
Schätzen einer Iststreckendämpfung eines Kommunikationssignals (205, 505) basierend auf dem Stärkewert,
Bestimmen eines Bereichs in dem Kommunikationsnetz, der durch eine erste und eine zweite Basisstation des Kommunikationsnetzes versorgbar ist basierend auf der geschätzten Iststreckendämpfung der ersten und zweiten Basisstationen durch Vergleichen der geschätzten Iststreckendämpfungswerte,
Ändern eines Zustandes (511) der ersten oder zweiten Basisstation des Kommunikationsnetzes basierend auf der geschätzten Iststreckendämpfung, wodurch die Stärke des von einer der ersten und zweiten Basisstation übertragenen Pilotsignals über einem Mindestschwellwert bleibt,
wodurch
die übertragene Stärke des Pilotsignals der Basisstation, die nicht über dem Mindestschwellwert liegt, prompt auf einen Pegel verringert wird, der keine Doppelbedeckung verursacht, bei Bestimmung des Bereichs unter Doppelbedeckung.

2. Verfahren nach Anspruch 1, wobei das Bestimmen des Bereichs weiterhin auf einer Istbelastung (207, 507) der jeweiligen Basisstationen basiert.

3. Verfahren nach Anspruch 1, wobei das Bestimmen des Bereichs in dem Kommunikationsnetz, der gegenwärtig durch mehr als eine Basisstation des Kommunikationsnetzes versorgbar ist, weiterhin auf statistischen Daten basiert.

4. Verfahren nach Anspruch 1, wobei das erste Netzelement eine Basisstation ist (101, 102).

5. Verfahren nach Anspruch 4, weiterhin umfassend:
Senden eines Zustandsänderungsanzeigers (208, 508) zu Nachbarnetzelementen, ehe der Zustand der Basisstation geändert wird.

6. Verfahren nach Anspruch 1, wobei das erste Netzelement eine Funkressourcenverwaltungseinheit ist.

7. Verfahren nach Anspruch 6, wobei die Funkressourcenverwaltungseinheit eine Zustandsänderungsanforderung (508) zu einer Basisstation des Kommunikationsnetzes basierend auf der geschätzten Iststreckendämpfung sendet.

8. Verfahren nach Anspruch 1, weiterhin umfassend:
Ändern eines Leistungspegels einer Basisstation basierend auf der geschätzten Streckendämpfung.

9. Verfahren nach Anspruch 8, wobei die ihren Leistungspegel ändernde Basisstation nach einem vorbestimmten Kriterium bestimmt wird.

10. Verfahren nach Anspruch 1, wobei das Ändern des Zustandes ein Erhöhen eines Leistungspegels der Basisstation ist und wobei mindestens eine Antenne der Basisstation geneigt wird.

11. Verfahren nach Anspruch 8, wobei das Ändern des Leistungspegels der Basisstation weiterhin auf einer Belastung der Basisstation basiert.

12. Netzelement, umfassend:
eine Empfangseinheit, eingerichtet zum Empfangen eines eine Stärke eines von einer Basisstation des Kommunikationsnetzes übertragenen Pilotsignals anzeigenden Wertes,
eine Schätzungseinheit, eingerichtet zum Schätzen einer Iststreckendämpfung eines Kommunikationssignals basierend auf dem Stärkewert, und
eine Steuereinheit, eingerichtet zum Bestimmen eines Bereichs im Kommunikationsnetz, die durch die erste oder eine zweite Basisstation des Kommunikationsnetzes versorgbar ist,
basierend auf der geschätzten Iststreckendämpfung der ersten und zweiten Basisstationen durch Vergleichen der geschätzten Iststreckendämpfungswerte, und
eingerichtet zum Erzeugen eines Steuersignals zum Ändern des Zustandes der ersten oder zweiten Basisstation des Kommunikationsnetzes basierend auf der geschätzten Iststreckendämpfung, wodurch die Stärke des von einer der ersten und zweiten Basisstation übertragenen Pilotsignals über einem Mindestschwellwert bleibt,
wobei die Steuereinheit bei Bestimmung des unter Doppelbedeckung liegenden Bereichs zur prompten Verringerung der übertragenen Stärke des Pilotsignals der Basisstation, die nicht über dem Mindestschwellwert liegt, auf einen nicht Doppelbedeckung verursachenden Pegel eingerichtet ist.

13. Computerprogramm, das bei Ausführung durch einen einem Netzelement zugeordneten Prozessor die Schritte eines Verfahrens nach Anspruch 1 ausführt.

14. Computerprogrammprodukt umfassend ein computerlesbares Medium, in dem ein Computerprogramm gespeichert ist, das bei seiner Ausführung durch einen einem Netzelement zugeordneten Prozessor eingerichtet ist, Computerprogrammmittel zum Ausführen der Schritte eines Verfahrens nach Anspruch 1 für den Prozessor bereitzustellen.

## Revendications

1. Un procédé de reconfiguration dynamique d'un réseau de communication (100), le procédé étant exécuté par un élément de réseau et comprenant les étapes suivantes :
la réception (203, 204, 503, 504), au niveau d'un premier élément de réseau, d'une valeur indiquant une puissance d'un signal pilote transmis à partir d'une station de base du réseau de communication,
l'estimation d'un affaiblissement de trajet réel d'un signal de communication (205, 505) en fonction de la valeur de puissance,
la détermination d'une zone dans le réseau de communication qui peut être couverte (207, 507) par une première et une deuxième stations de base du réseau de communication en fonction de l'affaiblissement de trajet réel estimé des première et deuxième stations de base par la comparaison des valeurs d'affaiblissement de trajet réel estimé,
la modification d'un état (511) de la première ou de la deuxième station de base du réseau de communication en fonction de l'affaiblissement de trajet réel estimé, grâce à quoi la puissance du signal pilote transmis à partir d'une station parmi la première et la deuxième stations de base demeure au dessus d'un seuil minimum,
dans lequel
la puissance transmise du signal pilote de la station de base qui n'est pas au dessus du seuil minimum est promptement réduite à un niveau n'entraînant pas de double couverture après détermination de la zone sous double couverture.

2. Le procédé selon la revendication 1,
dans lequel la détermination de la zone est en outre fonction d'une charge réelle (207, 507) de stations de base respectives.

3. Le procédé selon la revendication 1,
dans lequel la détermination de la zone dans le réseau de communication qui peut actuellement être couverte par plus d'une station de base du réseau de communication est en outre fonction de données statistiques.

4. Le procédé selon la revendication 1,
dans lequel le premier élément de réseau est une station de base (101, 102).

5. Le procédé selon la revendication 4, comprenant en outre :
l'envoi d'un indicateur de modification d'état (208, 508) à des éléments de réseau voisins avant que l'état de la station de base ne soit modifié.

6. Le procédé selon la revendication 1,
dans lequel le premier élément de réseau est une unité de gestion de ressources radio.

7. Le procédé selon la revendication 6,
dans lequel l'unité de gestion de ressources radio envoie une demande de modification d'état (508) à une station de base du réseau de communication en fonction de l'affaiblissement de trajet réel estimé.

8. Le procédé selon la revendication 1, comprenant en outre :
la modification d'un niveau de puissance d'une station de base en fonction de l'affaiblissement de trajet estimé.

9. Le procédé selon la revendication 8,
dans lequel la modification par la station de base de son niveau de puissance est déterminée selon un critère prédéterminé.

10. Le procédé selon la revendication 1,
dans lequel la modification de l'état est un accroissement d'un niveau de puissance de la station de base, et
dans lequel au moins une antenne de la station de base est inclinée.

11. Le procédé selon la revendication 8,
dans lequel la modification du niveau de puissance de la station de base est en outre fonction d'une charge de la station de base.

12. Un élément de réseau comprenant :
une unité de réception adaptée de façon à recevoir une valeur indiquant une puissance d'un signal pilote transmis à partir d'une station de base du réseau de communication,
une unité d'estimation adaptée de façon à estimer un affaiblissement de trajet réel d'un signal de communication en fonction de la valeur de puissance, et
une unité de commande adaptée de façon à déterminer une zone dans le réseau de communication qui peut être couverte par la première ou une deuxième station de base du réseau de communication en fonction de l'affaiblissement de trajet réel estimé des première et deuxième stations de base par la comparaison de valeurs d'affaiblissement de trajet réel estimé, et
adaptée de façon à générer un signal de commande destiné à la modification d'un état de la première ou de la deuxième station de base du réseau de communication en fonction de l'affaiblissement de trajet réel estimé, grâce à quoi la puissance du signal pilote transmis à partir d'une station parmi la première et la deuxième station de base demeure au dessus d'un seuil minimum,
dans lequel l'unité de commande, après détermination de la zone sous double couverture, est adaptée de façon à réduire promptement la puissance transmise du signal pilote de la station de base qui n'est pas au dessus du seuil minimum à un niveau n'entraînant pas de double couverture.

13. Un programme informatique, qui, lorsqu'il est exécuté par un processeur associé à un élément de réseau, réalise les étapes d'un procédé selon la revendication 1.

14. Un produit de programme informatique comprenant un support lisible par ordinateur, dans lequel un programme informatique est conservé en mémoire qui, lorsqu'il est exécuté par un processeur associé à un élément de réseau, est adapté de façon à fournir au processeur un moyen de programme informatique destiné à réaliser les étapes d'un procédé selon la revendication 1.
